# EUROPÄISCHE PATENTSCHRIFT

(11) **EP 1 075 924 B1**
(45) Veröffentlichungstag und Bekanntmachung des Hinweises auf die Patenterteilung: **11.09.2002**
(21) Anmeldenummer: 00113544.1
(22) Anmeldetag: 27.06.2000
(51) Int. Cl.: B29C 51/44

(54) **Verfahren zum Stapeln von Behältern aus thermoplastischem Kunststoff und Vorrichtung zur Durchführung des Verfahrens**
Method and device for piling containers made of thermoplastic material
Procédé et dispositif pour empiler des conteneurs en matière thermoplastique

(30) Priorität: 16.07.1999 DE 19933355
(43) Veröffentlichungstag der Anmeldung: 14.02.2001
(73) Patentinhaber: Illig, Adolf Maschinenbau GmbH & Co., 74081 Heilbronn (DE)
(72) Erfinder: Schlimgen, Stefan, 74080 Heilbronn-Böckingen (DE); Wozny, Michael, 74076 Heilbronn (DE)

(56) Entgegenhaltungen:
- EP-A- 1 000 887
- DE-A- 3 202 770
- DE-U- 7 330 214
- DE-U- 29 608 477
- US-A- 5 636 722

## Beschreibung

Die Erfindung betrifft ein Verfahren zum Stapeln von Behältern nach dem Oberbegriff des Patentanspruchs 1 sowie eine Vorrichtung zum Stapeln von Behältern gemäß dem Oberbegriff des Patentanspruchs 11.

Aus der DE 32 02 770 A1 ist ein Verfahren zum Stapeln von Kunststoffbehältern bekannt, bei dem diese mittels eines Schiebers abwechselnd zu zwei ortsfest angeordneten Stapelmagazinen geführt und in diese eingestapelt werden. Die Entnahme der sich bildenden Stapel aus den Stapelmagazinen bei einer bestimmten vorgegebenen Stückzahl erfolgt bekannterweise zwischen zwei Takten des Formwerkzeuges durch eine aufwendige Übergabeeinrichtung, wie sie in der US-A-4 132 319 dargestellt ist. Die Stapel können mit dieser Übergabeeinrichtung nur alle gemeinsam auf eine Platte oder ein Transportband aufgesetzt werden. Mit dieser Übergabeeinrichtung ist es folglich nicht möglich, eine Hintereinanderführung dieser Stapel herbeizuführen, wie es zum Nachbearbeiten - z.B. zum Bördeln oder zum Verpacken in Beuteln - erforderlich ist. Weitere aufwendige Einrichtungen oder manuelle Eingriffe sind nötig, um diese Stapel in horizontale Lage zu überführen. Dies ist störungsanfällig, weil Stapel zum Auseinanderdriften neigen. Ein weiterer Nachteil dieses Stapelverfahrens besteht darin, dass die Behälter über zwei Stapelkanten gedrückt werden müssen, was immer mit einer Deformationsgefahr verbunden ist. Beim Zurückkehren der Übergabeeinrichtung muss diese über die inzwischen gebildeten Stapel geschoben werden, was zu dieser Deformation führen kann, weil jeder Behälterrand über diese Rückhalteorgane geführt werden muss. Oder es sind aufwendige, formatbedingte Maßnahmen erforderlich, um die Rückhalteorgane der Übergabeeinrichtung verschiebbar zu gestalten, was an jeder Stange an mehreren Stellen erforderlich ist. Eine Handhabung der Stapel auf diese Weise ist teuer, störungsanfällig und birgt eine Deformationsgefahr für die Behälterränder. Die DE 32 02 770 A1 bildet den Oberbegriff der Ansprüche 1 und 11.

Aus der DE 296 08 477 U ist es bekannt, die Behälter in ein Stapelmagazin zu übergeben und dieses nach Erreichen einer vorgegebenen Stückzahl zu einer Entnahmestation zu führen. Dort werden die Stapel reihenweise ausgeschoben und über ein Querförderband hintereinander geführt. Während der Entnahme der Stapel bilden sich in einer Stapelplatte neue Stapel. Auch hier müssen die Behälterränder über zwei Rückhalteeinrichtungen mit der Gefahr der Deformation geführt werden. Es ist schwierig, eine genaue Anzahl der Behälter pro Stapel im Stapelmagazin zu erfassen, weil nicht direkt in das Stapelmagazin gestapelt wird und sich immer eine bestimmte Anzahl in der Stapelplatte befindet, folglich noch nicht vom Stapelmagazin gehalten ist. Diese Anzahl ist abhängig vom Stapelabstand, der geringfügig schwanken kann. Beim Anfahren der Vorrichtung muss diese Anzahl ermittelt und von der Steuerung eingerechnet werden. Dies führt auch zu Problemen bei Betriebsunterbrechungen.

Aus der US-A-5 636 722 ist eine Puffereinrichtung bekannt, die zur Pufferung von Teilen wie Schokoriegeln zwischen einer Fertigungseinrichtung und einer Verpackungseinrichtung dient, um einen Stillstand einer der Einrichtungen zu überbrücken. Teile werden reihenweise in eine große Anzahl von Aufnahmen für mehrere Reihen geschoben, diese Aufnahmen werden zu einer Entnahmestation geführt und dort werden die Teile wieder reihenweise ausgeschoben. Eingangszustand und Ausgangszustand der Teile sind gleich. Eine Stapelung von Teilen und eine Handhabung von Stapeln erfolgen nicht. Folglich gibt diese Veröffentlichung dem Fachmann keine Anregungen zum Lösen von Problemen beim Stapeln von Kunststoffbehältern ( Deformation eines Behälterrandes, Stückzahl pro Stapel, Hintereinanderführen von - auch mehrreihig - gebildeten Stapeln, Störungen bei der Handhabung der Stapel durch Auseinanderdriften, Kosten für formatabhängige Teile ).

Der Erfindung liegt die Aufgabe zugrunde, Behälterstapel mit definierter Anzahl zu bilden und diese auf einfache kostengünstige Weise ohne Gefahr der Deformation der Behälter und ohne aufwendiges Handhaben der Stapel Nachfolgeeinrichtungen hintereinanderliegend zuzuführen.

Zur Lösung der Aufgabe werden das Verfahren gemäß Patentanspruch 1 und die Vorrichtung gemäß Patentanspruch 11 vorgeschlagen.

Zweckmäßige Weiter bildungen der Erfindung sind gegenstand der betreffenden abhängigen Ansprüche.

Das Verfahren ist anhand der schematischen Zeichnungen verschiedener Ausführungsbeispiele der Vorrichtung näher beschrieben. Es zeigen:
- Figur 1: eine Seitenansicht und
- Figur 2: eine Draufsicht sowie
- Figur 3 und 4: eine Ansicht in Richtung X in zwei Phasen des Verfahrensablaufs bei einer ersten Ausführungsform der Vorrichtung.
- Figur 5: eine Seitenansicht einer zweiten Ausführungsform.
- Figur 6 und 7: Seitenansicht und Draufsicht einer dritten Ausführungsform.
- Figur 8: eine Draufsicht auf eine Vorrichtung gemäß einer vierten Ausführungsform.
- Figur 9 und 10: Eine Variante mit schwenkbaren und ggf. verfahrbaren Stapelmagazinen.
- Figur 11 und 12: Eine Variante mit einem Palettenband

Die Vorrichtung wird einer Thermoformmaschine nachgeschaltet, die mittels eines Formwerkzeuges 1 Behälter 2 aus einer erwärmten thermoplastischen Kunststofffolie 3 formt und ausstanzt. In den dargestellten Beispielen ist die eine Hälfte des Formwerkzeuges 1 schwenkbar bis zu einer horizontalen Lage ausgebildet, die Behälter 2 werden horizontal aus dem Formwerkzeug 1 ausgestoßen. Andere Ausgaberichtungen sind für das erfindungsgemäße Verfahren ebenfalls möglich, z.B. durch Schwenken des Formwerkzeuges 1 nur um 75° aus der Vertikalen heraus.

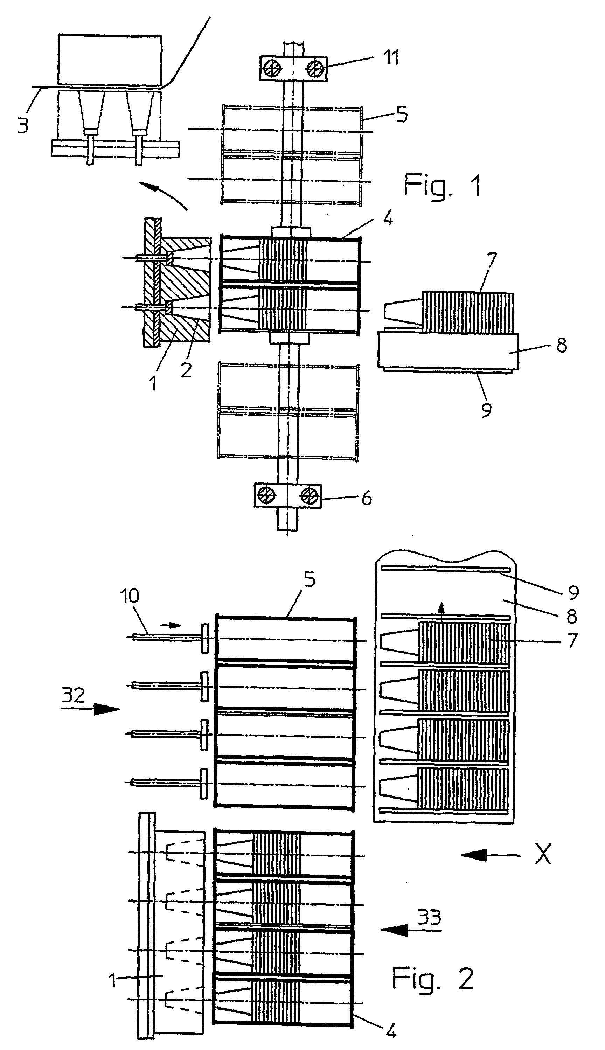

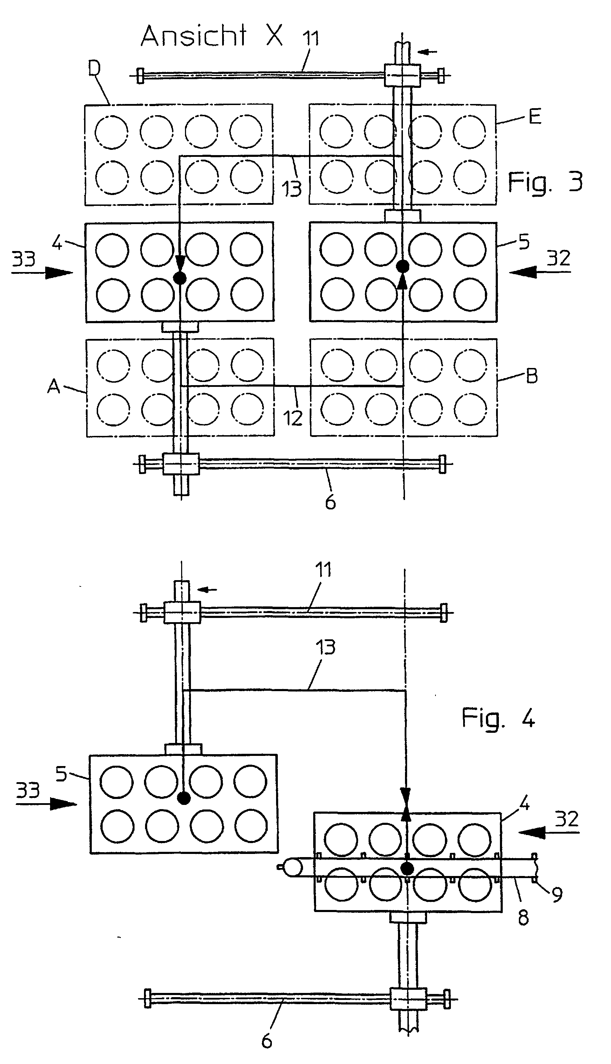

Bei einer Vorrichtung gemäß einer ersten Ausführungsform, die in den Figuren 1 bis 4 dargestellt ist, ist ein erstes Stapelmagazin 4 so nahe an der Öffnung des geschwenkten Formwerkzeuges 1 angeordnet, dass die Behälter 2 direkt in dieses eingestapelt werden können - diese Position wird als Stapelstation 33 bezeichnet. Rückhalteorgane halten die Behälter 2 in bekannter Weise zurück. Das Stapelmagazin 4 ist höhenverschiebbar ausgebildet und kann aus der Stapelstation 33 heraus so weit abgesenkt werden (Lage A in Figur 3), dass ein zweites Stapelmagazin 5 an seine Stelle gebracht werden kann, und zwar zwischen 2 Arbeitstakten des Formwerkzeuges 1. Das abgesenkte Stapelmagazin 4 ist über einen nicht dargestellten motorischen oder pneumatischen Antrieb horizontal verschiebbar um ein Maß größer als seine Baubreite bis in die Lage B in Figur 3. Es wird dabei von Führungen 6 getragen und geführt. Aus dieser Lage B heraus wird es stufenweise in eine Stapelentnahmestation 32 soweit angehoben, dass zunächst die obere Reihe von Stapeln 7 auf Höhe eines quer verlaufenden Transportbandes 8 mit Querbalken 9 zu liegen kommt (Lage in Figur 4). Über Schieber 10 wird eine Reihe von Stapeln 7 auf das Transportband 8 ausgeschoben. Das Transportband 8 führt die Stapel 7 - ggf. über ein weiteres Transportband - einer Weiterbearbeitung/-behandlung zu. Es folgt eine weitere Anhebung des Stapelmagazines 4, so dass die nächste Reihe von Stapeln 7 ausgeschoben werden kann. Bei dreireihigen Stapelmagazinen erfolgt in gleicher Weise das Räumen der dritten Stapelreihe.

Wenn das Stapelmagazin 4 entleert ist wird es abgesenkt und zurück in die Stellung A geführt. Es wartet dort, bis im Stapelmagazin 5 die vorgegebene Anzahl von Behältern 2 pro Stapel 7 erreicht ist. Dann erfolgt zwischen zwei Takten des Formwerkzeuges 1 der Wechsel der Stapelmagazine 4 und 5, in dem das Stapelmagazin 5 angehoben wird in Stellung D und das Stapelmagazin 4 seine Stapelstellung einnimmt. Das Stapelmagazin 5 ist über einen Antrieb höhenverschiebbar und über einen zweiten Antrieb horizontal verschiebbar bis in die Stellung E (Figur 3), dabei geführt und getragen von Führungen 11. Aus der Stellung E heraus folgt das Absenken stufenweise, so dass die einzelnen Stapelreihen vor das Transportband 8 geführt und ausgeschoben werden können.

Nach dem Leeren des Stapelmagazines 7 wird dieses in Stellung D überführt und zum nächsten Magazinwechsel bereitgehalten, sodass dieser sehr rasch bei kurzem Fahrweg vorgenommen werden kann. Die Bewegungsrichtungen beider Stapelmagazine 4, 5 ist durch die Pfeile 12, 13 dargestellt.

Durch diese Verfahrensweise ist es möglich, alle Behälter 2 direkt ohne weitere Übergabe in Stapelmagazine 4, 5 einzustapeln und abgezählte Stapel 7 einfach herzustellen. Eine Umstellung der Vorrichtung auf eine andere Behälterform erfolgt auf einfache Weise durch einen Wechsel der beiden Stapelmagazine 4, 5 und eine Programmierung des Hubes, der zum Räumen der einzelnen Stapelreihen erforderlich ist. Dies ist rasch und ohne Aufwand möglich. Bei dieser Verfahrensweise sind die Behälter keinen großen Bewegungen in freier Atmosphäre unterworfen, was eine Verkeimung der Behälteroberfläche zur Folge haben könnte.

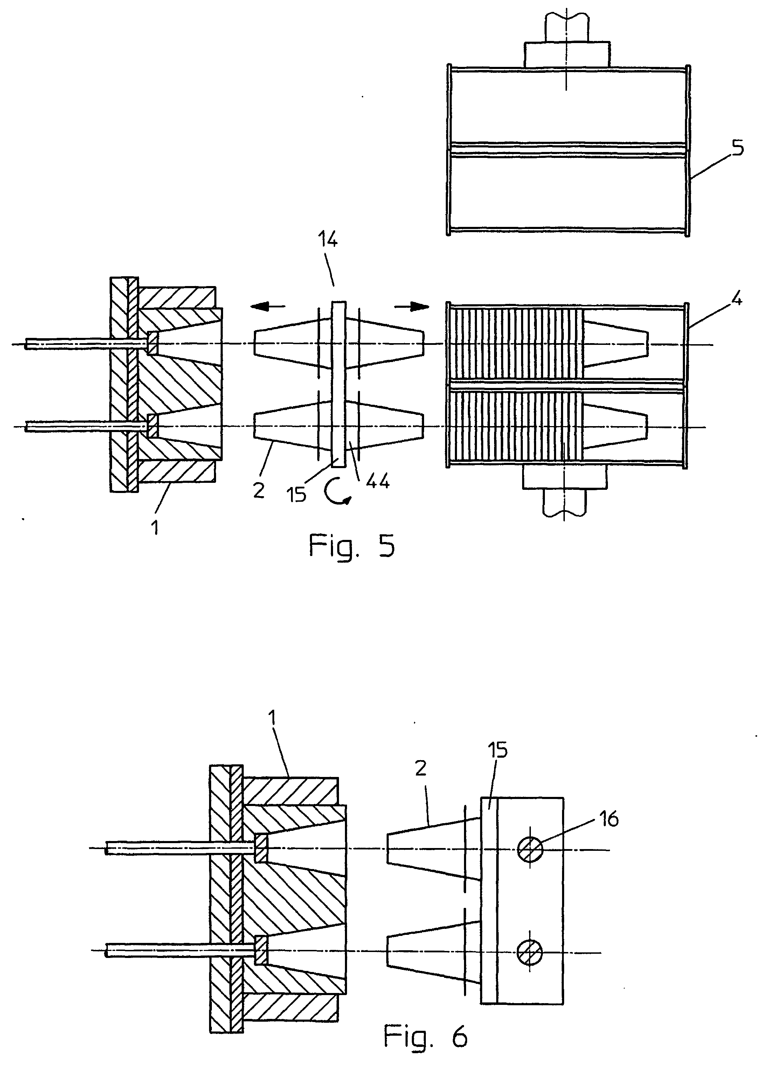

In Figur 5 ist eine Erweiterung des Stapelverfahrens dargestellt in der Weise, dass die Behälter 2 vor dem Stapeln um 180° gedreht werden, also mit dem Boden voran in die Stapelmagazine 4, 5 geschoben werden. Dies bringt gewisse Vorteile bei der Stapelbildung und bei der Weiterführung der Stapel zu Nachfolgeeinrichtungen. In diesem Fall ist zwischen dem gekippten Formwerkzeug 1 und den Stapelmagazinen 4, 5 als Übergabeeinrichtung eine Wendeeinrichtung 14 angeordnet, die über eine Saugplatte 15, ggf. mit Zentrierdomen 44, die ausgestoßenen Behälter 2 übernimmt, dreht und in die Stapelmagazine 4, 5 übergibt, die bei dieser Ausführungsform in gleicher Weise verschiebbar - nur auf Abstand zum Formwerkzeug 1 - angeordnet sind.

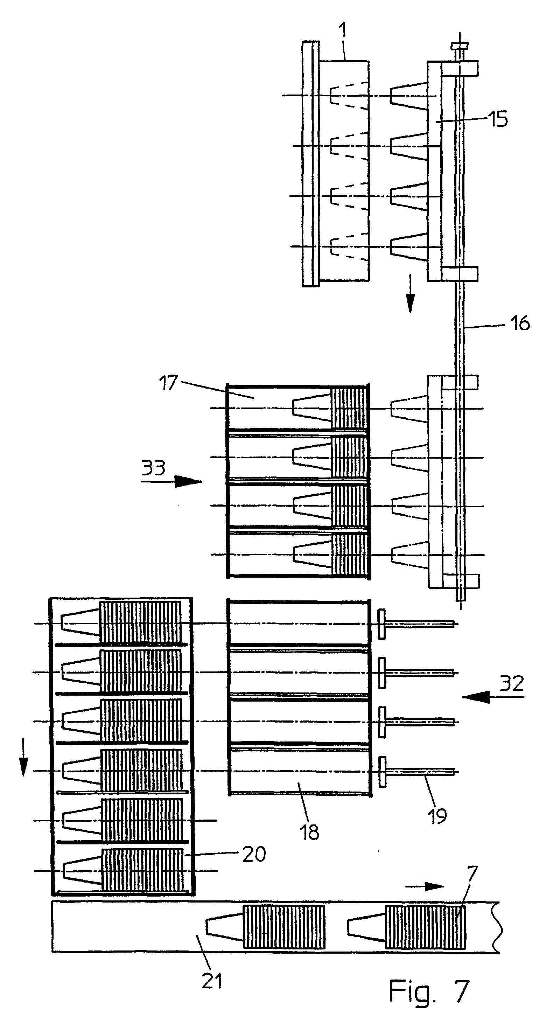

Eine Verbesserung der Zugänglichkeit des Formwerkzeuges 1, z. B. zu dessen Wechsel, Reinigung, Beobachtung, wird durch eine Variation des Verfahrens ermöglicht, das anhand der Vorrichtung nach den Figuren 6 und 7 beschrieben ist. Auch in diesem Fall erfolgt die Übergabe der ausgestoßenen Behälter 2 an eine Übergabeeinrichtung in Form einer Halteplatte15, die an Führungen 16 quer verschiebbar ist bis vor ein Stapelmagazin 17, in das die Behälter 2 übergeben werden. Dabei erfolgt diese Übergabe durch eine Relativbewegung zwischen dem Stapelmagazin 17 und der Halteplatte 15 über einen nicht dargestellten Antrieb, der am Stapelmagazin 17 oder an der Halteplatte 15 wirksam wird. Dieses Stapelmagazin 17 ist - in gleicher Weise wie in Figur 3 dargestellt - mit einem Stapelmagazin 18 wechselbar. Das Ausschieben der Stapel 7 erfolgt in gleicher Weise mittels einer Ausschiebeeinrichtung 19 auf ein Transportband 20 und ggf. auf ein weiteres Transportband 21.

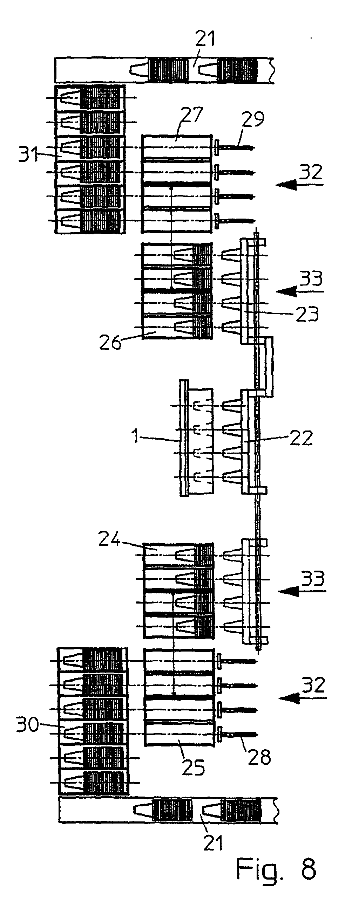

Bei einer Vorrichtung nach Figur 8 wird das Verfahren in der Weise abgewandelt, dass das Überführen der Behälter 2 abwechselnd in zwei Richtungen mittels zweier Halteplatten 22, 23 erfolgt. Die Halteplatte 22 führt die Behälter 2 auf eine Seite zu einer Stapelstation 33 mit den Stapelmagazinen 24, 25, die andere Halteplatte 23 zu einer zweiten Stapelstation 33 mit den Stapelmagazinen 26, 27. Es werden dann zwei Ausschiebeeinrichtungen 28, 29 und zwei Transportbänder 30, 31 eingesetzt. Der Wechsel der Stapelmagazine 24, 25 bzw. 26, 27 erfolgt in gleicher Weise wie zuvor beschrieben.

Dieses Verfahren bietet zusätzlich den Vorteil, dass es bei sehr hohen Taktzahlen des Formwerkzeuges 1 eingesetzt werden kann, wenn die Taktzeit in der Größenordnung von 1,5 Sekunden nicht ausreicht, die von der Übergabeeinrichtung aufgenommenen Behälter 2 zu einer seitlichen Stapelstation 33 und zurück vor das Formwerkzeug 1 zu führen.

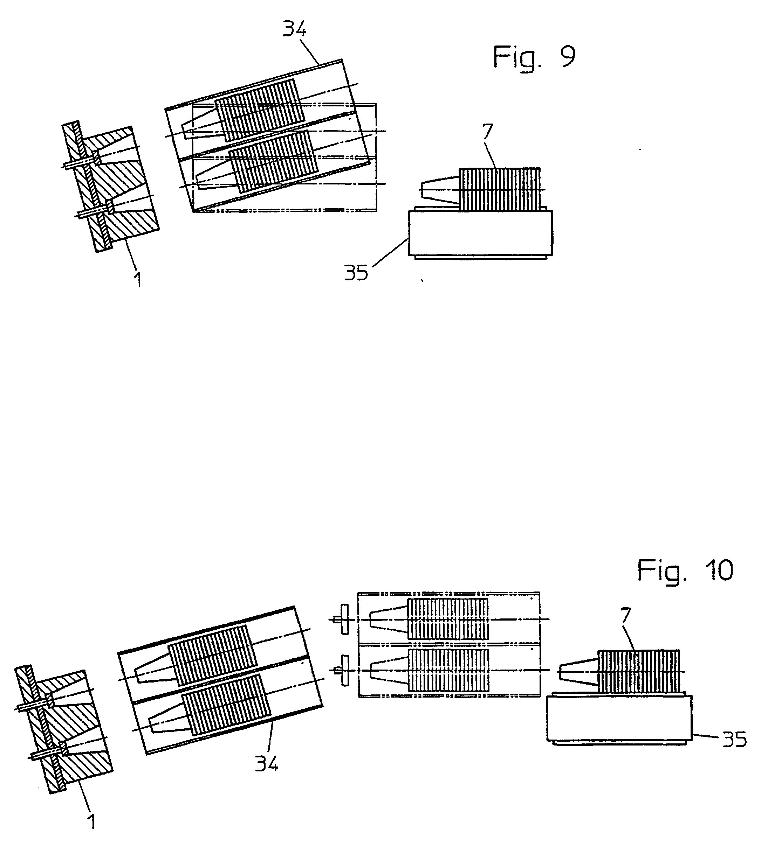

In den dargestellten Beispielen Figuren 1 - 8 erfolgt das Stapeln aus dem Formwerkzeug heraus horizontal. Falls dieses wie in den Figuren 9 und 10 dargestellt schräg erfolgt kann es vorteilhaft sein, die sich in der Stapelentnahmestation 32 befindlichen Stapelmagazine 34 vor dem Herausschieben der Stapel 7 in horizontale Lage zu schwenken und ggf. in Stapelrichtung zu verfahren, um vor einem Querförderband 35 zu liegen.

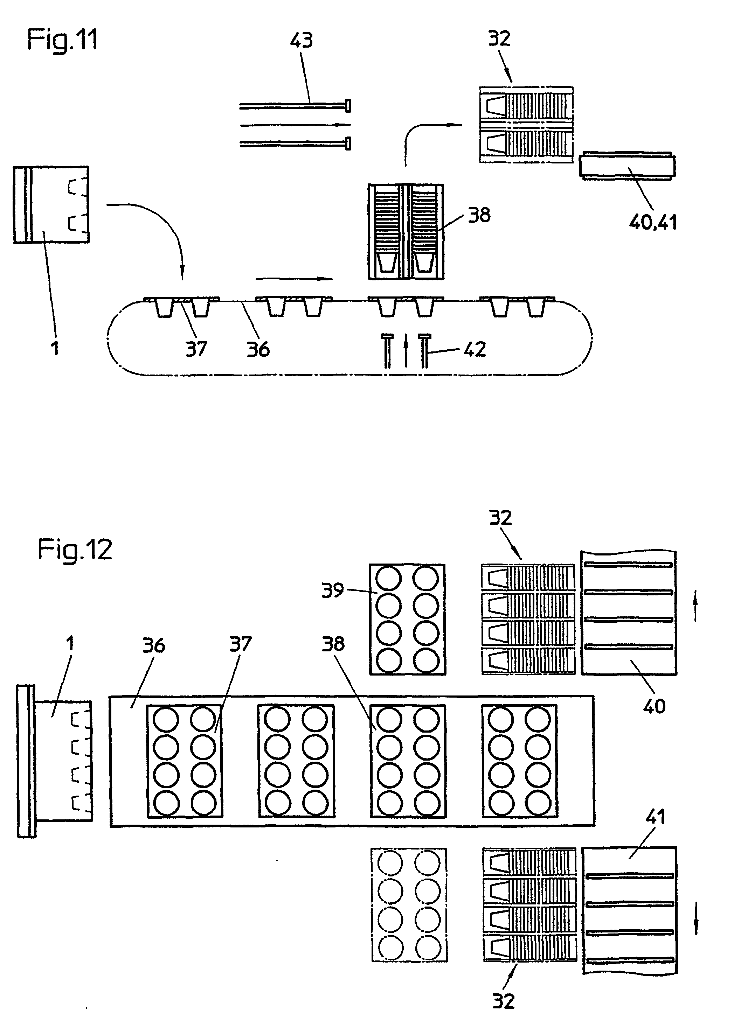

Die Figuren 11 und 12 zeigen eine Abwandlung des Verfahrens in der Weise, dass die Behälter 2 vor dem Stapeln in ein umlaufendes Palettenband 36 mit Durchbrüche aufweisenden Paletten 37 übergeben werden. Aus diesen heraus erfolgt das Übergeben in die senkrecht angeordneten Stapelmagazine 38, 39, die abwechselnd über eine Palette 37 und damit in eine Stapelstation 33 geführt werden, unter der eine Ausschiebeeinrichtung 42 angeordnet ist. In diesen Figuren 11, 12 ist beispielhaft dargestellt, dass die Stapelmagazine 38, 39 von der Stapelstation 33 aus zu zwei Stapelentnahmestationen 32 geführt werden, sodass nach dem Anheben und Abkippen der Stapelmagazine 38, 39 in dieser Stapelentnahmestation 32 die Stapel 7 auf zwei Transportbänder 40, 41 geführt werden. Durch entsprechendes Absenken der Stapelmagazine 38, 39 kann ein reihenweiser Austransport der Stapel 7 mittels einer Ausstapeleinrichtung 43 erfolgen. Es ist aber in gleicher Weise möglich, die beiden Stapelmagazine 38, 39 zu einer einzigen Stapelentnahmestation 32 zu führen wie bei den anderen Ausführungsbeispielen durch eine entsprechende u-förmige Bewegung beider Stapelmagazine 38, 39.

## Patentansprüche

1. Verfahren zum Stapeln von Behältern (2), die in einem Formwerkzeug (1) aus einer thermoplastischen Kunststofffolie (3) geformt, ausgestanzt, zu einer oder abwechselnd zu zwei Stapelstationen (33) geführt und dort in Stapelmagazinen gestapelt werden, wobei die Stapel (7) bei einer vorgegeben Anzahl von Behältern (2) aus diesen entnommen und zu einer Nachfolgeeinrichtung geführt werden, **dadurch gekennzeichnet, dass** die Behälter (2) pro Stapelstation (33) abwechselnd in zwei, zwischen der Stapelstation (33) und einer Stapelentnahmestation (32) verschiebbare Stapelmagazine (4,5,17,18,24,25,26,27,38,39) eingestapelt werden, wobei der Wechsel der Stapelmagazine (4,5,17,18,24,25,26,27,38,39) bei Erreichen der vorgegebenen Anzahl von Behältern (2) pro Stapel (7) während eines Taktes des Formwerkzeuges (1) erfolgt.

2. Verfahren nach Anspruch 1 **dadurch gekennzeichnet, dass** das Überführen der Behälter (2) aus dem Formwerkzeug (1) in die Stapelmagazine (4, 5) direkt erfolgt.

3. Verfahren nach Anspruch 1 **dadurch gekennzeichnet, dass** die Behälter (2) zunächst von einer Übergabeeinrichtung (14,15) aufgenommen und dann in die Stapelmagazine (4,17,24,26) übergeben werden.

4. Verfahren nach Anspruch 3 **dadurch gekennzeichnet, dass** die Behälter (2) vor dem Stapeln um 180° gedreht werden.

5. Verfahren nach Anspruch 3 **dadurch gekennzeichnet, dass** die Behälter (2) rechtwinklig zu ihrer Ausstoßrichtung verschoben und zu einer seitlich angeordneten Stapelstation (33) mit je zwei Stapelmagazinen (17,18) geführt werden.

6. Verfahren nach Anspruch 5 **dadurch gekennzeichnet, dass** das Überführen der Behälter (2) abwechselnd durch zwei Halteplatten (22, 23) erfolgt, die zu jeweils zwei seitlich angeordneten Stapelstationen (33) mit je zwei Stapelmagazinen (24, 25, 26, 27) geführt werden.

7. Verfahren nach Anspruch 1 **dadurch gekennzeichnet, dass** die Behälter (2) zunächst in ein Palettenband (36) übergeben und aus den Paletten (37) heraus in die Stapelmagazine (38, 39) übergeben werden.

8. Verfahren nach einem der Ansprüche 1 bis 7 **dadurch gekennzeichnet, dass** das Verschieben der beiden Stapelmagazine (4,5,17,18,26,27,24,25,38,39) zwischen der Stapelstation (33) und der Stapelentnahmestation (32) in einem U-förmigen, entgegengesetzten Bewegungsablauf erfolgt.

9. Verfahren nach einem der Ansprüche 1 bis 7 **dadurch gekennzeichnet, dass** das Verschieben der beiden Stapelmagazine (4,5,17,18,26,27,24,25,38,39) zu je einer eigenen Stapelentnahmestation (32) erfolgt.

10. Verfahren nach einem der Ansprüche 1 bis 9 **dadurch gekennzeichnet, dass** jedes Stapelmagazin (4,5,17,18,24,25,26,27,38,39) in der Stapelentnahmestation (32) intermittierend höhenmäßig verschoben wird und in jeder Rastphase eine Reihe von Stapeln (7) ausgestoßen wird.

11. Vorrichtung zum Stapeln von Behältern (2), die in einem Formwerkzeug (1) aus einer thermoplastischen Kunststofffotie (3) geformt und ausgestanzt werden, mit einer oder zwei Stapelstationen (33) mit Stapelmagazinen zur Aufnahme der Behälter (2) und einer Einrichtung zur Entnahme der gebildeten Stapel (7) und zum Zuführen zu einer Nachbearbeitungsstation, **gekennzeichnet durch** je zwei Stapelmagazine (4,5,17,18,24,25,26,27,38,39) in jeder Stapelstation (33), die zwischen der Stapelstation (33) und einer Stapelentnahmestation (32) zwischen zwei Takten des Formwerkzeuges (1) verschiebbar ausgebildet sind.

12. Vorrichtung nach Anspruch 11 **dadurch gekennzeichnet, dass** das sich in der Stapelstation (33) befindliche Stapelmagazin (4, 5) direkt vor dem in Abgabestellung befindlichen Formwerkzeug (1) angeordnet ist.

13. Vorrichtung nach Anspruch 11 **gekennzeichnet durch** eine Übergabeeinrichtung (14,15) zum Überführen der Behälter (2) vom Formwerkzeug (1) in die Stapelstation (33).

14. Vorrichtung nach Anspruch 13 **dadurch gekennzeichnet, dass** die Übergabeeinrichtung als Wendeeinrichtung (14) zum Drehen der Behälter (2) um 180° ausgebildet ist.

15. Vorrichtung nach Anspruch 13 **dadurch gekennzeichnet, dass** die Übergabeeinrichtung als rechtwinklig zur Ausstoßrichtung der Behälter (2) verschiebbare Halteplatte (15) ausgebildet ist und die Stapelstation (33) seitlich zum Formwerkzeug (1) angeordnet ist.

16. Vorrichtung nach Anspruch 13 **dadurch gekennzeichnet, dass** die Übergabeeinrichtung aus zwei verschiebbaren Halteplatten (22, 23) besteht, die zu je einer Stapelstation (33) mit je zwei verschiebbaren Stapelmagazinen (24, 25, 26, 27) geführt werden können.

17. Vorrichtung nach Anspruch 13 **dadurch gekennzeichnet, dass** die Übergabeeinrichtung aus einem umlaufenden Palettenband (36) besteht.

## Claims

1. Method of stacking containers (2) which are formed from a thermoplastic synthetic material foil (3) in a mould tool (1), punched out, led to one or alternately to two stacking stations (3) and stacked there in stacking magazines, wherein the stack (7) is removed therefrom when it has a predetermined number of containers (2) and is guided to downstream equipment **characterised in that** the containers (2) are stacked at each stacking station (33) alternately in two stack magazines (4, 5, 17, 18, 24, 25, 26, 27, 38, 39) displaceable between the stacking station (33) and a stack removal station (32), wherein the exchange of the stack magazines (4, 5, 17, 18, 24, 25, 26, 27, 38, 39) is carried out on reaching the predetermined number of containers (2) per stack (7) during a cycle of the mould tool (1).

2. Method according to claim 1, **characterised in that** the transfer of the containers (2) from the mould tool (1) to the stack magazines (4, 5) is carried out directly.

3. Method according to claim 1, **characterised in that** the containers (2) are initially taken over from a transfer device (14, 15) and then transferred to the stack magazines (4, 17, 24, 26).

4. Method according to claim 3, **characterised in that** the containers are turned through 180° before stacking.

5. Method according to claim 3, **characterised in that** the containers (2) are displaced at right angles to the direction of ejection thereof and are guided to a laterally arranged stacking station (33) with two respective stack magazines (17, 18).

6. Method according to claim 5, **characterised in that** the transfer of the containers (2) is carried out in alternation by two holding plates (22, 23) which are guided each time to two laterally arranged stacking stations (33) each with two stack magazines (24, 25, 26, 27).

7. Method according to claim 1, **characterised in that** the containers (2) are initially transferred to a pallet belt (36) and transferred from the pallets (37) to the stack magazine (38, 39).

8. Method according to one of claims 1 to 7, **characterised in that** the displacing of the two stack magazines (4, 5, 17, 18, 24, 25, 26, 27, 38, 39) between the stacking station (33) and the stack removal station (32) is carried out in a U-shaped, opposing movement course.

9. Method according to one of claims 1 to 7, **characterised in that** the displacing of the two stack magazines (4, 5, 17, 18, 24, 25, 26, 27, 38, 39) is carried out to a respective own stack removal station (32).

10. Method according to one of claims 1 to 9, **characterised in that** each stack magazine (4, 5, 17, 18, 24, 25, 26, 27, 38, 39) is intermittently displaced in height in the stack removal station (32) and a row of stacks (17) is ejected in each rest phase.

11. Device for stacking containers (2) which are formed from a thermoplastic synthetic material foil (3) in a mould tool (1) and punched out, comprising one or two stacking stations (33) with stack magazines for receiving the containers (2) and a device for removal of the formed stack (7) and for feeding to a downstream processing station, **characterised by** two respective stack magazines (4, 5, 17, 18, 24, 25, 26, 27, 38, 39) in each stacking station (33), the magazines being constructed to be displaceable between the stacking station (33) and a stack removal station (32) between two cycles of the mould tool (1).

12. Device according to claim 11, **characterised in that** the stack magazine (4, 5) disposed in the stacking station (33) is arranged directly in front of the mould tool (1) disposed in the discharge setting.

13. Device according to claim 11, **characterised by** a transfer device (14, 15) for transferring the containers (2) from the mould tool (1) to the stacking station (33).

14. Device according to claim 13, **characterised in that** the transfer device is constructed as a turning device (14) for rotating the containers (2) through 180°.

15. Device according to claim 13, **characterised in that** the transfer device is constructed as holding plate (15) displaceable at right angles to the direction of ejection of the containers (2) and the stacking station is arranged laterally of the mould tool (1).

16. Device according to claim 13, **characterised in that** the transfer device consists of two displaceable holding plates (22, 23) which can each be guided to a respective stacking station (33) with two respective displaceable stack magazines (24, 25, 26, 27).

17. Device according to claim 13, **characterised in that** the transfer device consists of a circulating pallet belt (36).

## Revendications

1. Procédé pour empiler des récipients (2) qui sont moulés à partir d'une feuille (3) de matière thermoplastique dans un outil de moulage (1), découpés, amenés à un poste ou alternativement à deux postes d'empilage (33) où ils sont empilés dans des magasins à piles, les piles (7), quand elles contiennent un nombre donné de récipients, étant retirées des magasins et amenées à un dispositif qui fait suite,
**caractérisé en ce que**
les récipients (2), pour chaque poste d'empilage (33), sont empilés alternativement dans deux magasins à piles (4, 5, 17, 18, 24, 25, 26, 27, 38, 39) pouvant coulisser entre le poste d'empilage (33) et un poste d'extraction de piles (32), l'échange des magasins à piles (4, 5, 17, 18, 24, 25, 26, 27, 38, 39) ayant lieu quand un nombre donné de récipients (2) par pile est atteint, pendant un cycle de l'outil de moulage (1).

2. Procédé selon la revendication 1,
**caractérisé en ce que**
le passage des récipients (2) de l'outil de moulage (1) aux magasins à piles (4, 5) s'effectue directement.

3. Procédé selon la revendication 1,
**caractérisé en ce que**
les récipients (2) sont d'abord accueillis par un dispositif de transfert (14, 15), puis transférés dans les magasins à piles (4, 17, 24, 26).

4. Procédé selon la revendication 3,
**caractérisé en ce que**
les récipients (2) sont tournés de 180° avant empilage.

5. Procédé selon la revendication 3,
**caractérisé en ce que**
les récipients coulissent perpendiculairement à leur direction d'éjection et sont amenés à un poste d'empilage (33) disposé latéralement et équipé de deux magasins à piles (17, 18).

6. Procédé selon la revendication 5,
**caractérisé en ce que**
le transfert des récipients (2) est assuré alternativement par deux plateaux de maintien (22, 23) qui sont amenés chacun à deux postes d'empilage (33) disposés latéralement et comportant chacun deux magasins à piles (24, 25, 26, 27).

7. Procédé selon la revendication 1,
**caractérisé en ce que**
les récipients (2) sont d'abord délivrés sur une bande à palettes (36) et transférés des palettes (37) dans les magasins à piles (38, 39).

8. Procédé selon une quelconque des revendications 1 à 7,
**caractérisé en ce que**
le coulissement des deux magasins à piles (4, 5, 17, 18, 26, 27, 24, 25, 38, 39) passant du poste d'empilage (33) au poste d'extraction de piles (32) a lieu selon un parcours en forme d'U à inversion de sens.

9. Procédé selon une quelconque des revendications 1 à 7,
**caractérisé en ce que**
le coulissement des deux magasins à piles (4, 5, 17, 18, 26, 27, 24, 25, 38, 39) s'effectue chaque fois en direction d'un poste d'extraction de piles (32) individuel.

10. Procédé selon une quelconque des revendications 1 à 9,
**caractérisé en ce que**
chaque magasin à piles (4, 5, 17, 18, 24, 25, 26, 27, 38, 39) est coulissé en hauteur avec intermittence dans le poste d'extraction de pile (32) et à chaque phase d'arrêt une série de piles (7) est éjectée.

11. Dispositif pour empiler des récipients (2) qui sont moulés dans un outil de moulage (1) à partir d'une feuille (3) en matière thermoplastique et découpés, comportant un ou deux postes d'empilage (33) avec des magasins à piles pour accueillir les récipients (2) ainsi qu'un dispositif pour retirer la pile (7) formée et l'amener à un poste de façonnage ultérieur,
**caractérisé en ce qu'**
il y a chaque fois deux magasins à piles (4, 5, 17, 18, 24, 25, 26, 27, 38, 39) à chaque poste d'empilage (33) et ces magasins peuvent coulisser pour passer de la station d'empilage (33) à une station d'extraction de piles (32), entre deux cycles de l'outil de moulage (1).

12. Dispositif selon la revendication 11,
**caractérisé en ce que**
le magasin à piles (4, 5) qui se trouve dans la station d'empilage (33) est placé directement devant l'outil de moulage (1) quand celui-ci se trouve en position de livraison.

13. Dispositif selon la revendication 11,
**caractérisé en ce qu'**
il comporte un dispositif de transfert (14, 15) pour faire passer les récipients (2) de l'outil de moulage (1) à la station d'empilage (33).

14. Dispositif selon la revendication 13,
**caractérisé en ce que**
le dispositif de transfert est un dispositif de retournement (14) faisant tourner le récipient (2) de 180°.

15. Dispositif selon la revendication 13,
**caractérisé en ce que**
le dispositif de transfert est un plateau de maintien (15) pouvant coulisser perpendiculairement à la direction d'éjection du récipient (2) et la station d'empilage (33) est disposée latéralement par rapport à l'outil de moulage (1).

16. Dispositif selon la revendication 13,
**caractérisé en ce que**
le dispositif de transfert est composé de deux plateaux de maintien (22, 23) coulissants, qui peuvent être amenés chaque fois à une station d'empilage (33) comprenant deux magasins à piles (24, 25, 26, 27) coulissants.

17. Dispositif selon la revendication 13,
**caractérisé en ce que**
le dispositif de transfert est constitué par une bande à palettes (36) fonctionnant en circuit fermé.
